# EUROPEAN PATENT SPECIFICATION

(11) **EP 1 186 242 B1**
(45) Date of publication and mention of the grant of the patent: **29.11.2006**
(21) Application number: 01919837.3
(22) Date of filing: 09.04.2001
(51) Int. Cl.: A23L 1/182

(54) **PROCESS FOR PREPARING WATER-ABSORBING RICE**
VERFAHREN ZUR HERSTELLUNG VON WASSERABSORBIERENDEM REIS
PROCEDE DE PREPARATION DE RIZ ABSORBEUR D'EAU

(30) Priority: 17.04.2000 JP 2000115744
(43) Date of publication of application: 13.03.2002
(73) Proprietor: Ishida, Yukio, Shimizu-shi, Shizuoka-ken 424-0815 (JP)
(72) Inventor: Ishida, Yukio, Shimizu-shi, Shizuoka-ken 424-0815 (JP)
(74) Representative: Gille Hrabal Struck Neidlein Prop Roos
(86) International application number: PCT/JP2001/003045
(87) International publication number: WO 2001/078527

(56) References cited:
- EP-A- 0 379 870
- JP-A- 9 252 731
- JP-A- 10 155 447
- JP-A- 52 099 247
- JP-A- 53 012 438
- JP-A- 53 079 047
- JP-A- 60 016 556
- US-A- 4 338 344
- US-A- 4 927 660
- DATABASE WPI Section Ch, Week 197747 Derwent Publications Ltd., London, GB; Class D13, AN 1977-83939Y XP002333599 -& JP 52 122645 A (DAINIPPON PRINTING CO LTD) 15 October 1977 (1977-10-15)
- PATENT ABSTRACTS OF JAPAN vol. 1998, no. 11, 30 September 1998 (1998-09-30) -& JP 10 155447 A (KAO CORP), 16 June 1998 (1998-06-16)
- PATENT ABSTRACTS OF JAPAN vol. 009, no. 130 (C-284), 5 June 1985 (1985-06-05) -& JP 60 016556 A (HIYOUZOU KONNO), 28 January 1985 (1985-01-28)

## Description

### Technical Field to which the Invention Belongs

The present invention relates to an improved method for making water-absorbed rice.

More specifically, the invention relates to a method for making water-absorbed rice at quite good efficiency.

The water-absorbed rice made by the invention can be packed either in a home container for one-dish meal by dividing the same into small portions or in a large-sized container as raw rice in restaurants, hospitals or the like. At the time of eating, α-conversion is completed by only heating the same in a microwave oven, a steamer or a rice cooker for a short period of time, and good-tasting cooked rice is provided with a flavor of fresh-boiled rice.

### Prior Art

A method for making water-absorbed rice using a closed container has been so far described in the gazette of Japanese Patent No. 2,873,993.

In this gazette, it is described that dipped rice (not α-converted) and an aqueous solution in an amount of water absorption are together put into a closed container, sealed, heated in the closed container at 65°C or higher, and then cooled to 0 to 25°C, and the heating and cooling are repeated to make water-absorbed rice (water content is 100 to 160 parts by weight per 100 parts by weight of raw rice) put in the closed container.

This method for making water-absorbed rice appears to be an excellent method in line with a principle of making water-absorbed rice. However, for conducting water absorption by charging dipped rice and an aqueous solution for water absorption into a closed container, sealing the container and repeating the heating and cooling, the closed container had to be turned sideways and reversely and be swung in hot water.

Such an operation was mechanically quite difficult. Further, even when this operation was fully repeated, rice grains were sometimes not heated uniformly, with the result that rice grains did not absorb water uniformly. It was difficult to make complete, excellent water-absorbed rice.

When water-absorbed rice that did not uniformly absorb water was heated in a microwave oven or a steamer to obtain boiled rice, it had a flavor of fresh-boiled rice, but sometimes partially gave feel in the mouth with a difference in hardness. Thus, it was not said to be complete boiled rice.

WPI Section CH, AN 1977-83939Y and JP 52-122645 A disclose a method for providing water-absorbed rice. However, the absorbed water amount is an amount corresponding to 40 to 50 % by weight only.

US-A-4,338,344 discloses a fully gelatinized rice which is provided by drying at a high temperature, whereby 100 % gelatinization is maintained.

EP-A-0 379 870 discloses a method for making 100 % gelatinized dry rice, wherein 85 - 100 % gelatinized water-absorbed rice is dried at 140 to 205 °C, thereby obtaining 100 % gelatinized rice.

Patent Abstracts of Japan, Vol. 1998, and JP-A-10155447 disclose an instant rice. Raw rice (water content: 20 % or less) is sterilized at a high temperature, immersed in water of 0 to 60 °C to attain a water content of 32 to 90 % and brought into a vessel or container to be sealed. Thus the temperature range for the water absorption is very low.

Patent Abstracts of Japan, Vol. 009, No. 130 (C-284) + JP-A-60016556 provides a dry rice. Raw rice is immersed in water for 5 to 15 minutes, steamed for at least 6 minutes or immersed in hot water of 90 °C or more for 5 to 8 minutes and dried to a water content of 5 to 50 %. Thus the water content of the rice disclosed in is very low.

### Means for Solving the Problems

The present inventor has conducted investigations to solve the problems, and has made it possible to exert uniform heat on whole surfaces of rice grains and proceed with uniform α-conversion by conducting jumping heating of dipped rice grains in a hot aqueous solution before charging the same into a container whereby uniform water absorption is later achieved in a broader range.

The "jumping heating" in the invention means that rice grains are jumped up one by one in a hot aqueous solution to uniformly contact whole surfaces of the grains with the hot aqueous solution and allow uniform heating, the rice grains are repeatedly circulated as such (in each separated state) and this treatment is conducted to a desired degree of α-conversion, which is 60 - 80 %.

For conducting the jumping heating, there are the following methods.
1. In a boiling aqueous solution, bubbles are generated upward from a bottom to be heated. When dipped rice is charged therein, all rice grains are circulated while bubbles jump up the rice grains one by one to proceed with α-conversion.
   This method is employed in heating at a heating temperature of 90°C to 100°C under atmospheric pressure. Further, it can also be applied to heating at 100°C to 120°C under increased pressure.
2. Another method is that while a hot aqueous solution is agitated with an agitator installed or inserted and dipped rice grains charged are jumped one by one, all rice grains are circulate (jumped one by one) to proceed with α -conversion.
   This method can be employed at any heating temperature of 60 to 120°C.
3. Still another method is that while air of room temperature or hot air which is fed from a bottom (a central portion or an appropriate position) and blown as bubbles using a bubbling machine installed or inserted and dipped rice grains charged are jumped one by one, all rice grains are circulated to proceed with α-conversion.

This method can be employed at any heating temperature of 60 to 120°C.

A raw material of the invention may be dipped rice. Dipped rice used in the invention is rice obtained by dipping polished rice in water or hot water for at least 10 minutes or rice obtained by treating further the thus-dipped rice with hot air or steam and/or pressurized steam for instantaneously heating and sterilizing surfaces of rice grains in a wet state at approximately 120°C before charging into an aqueous solution. However, these treatments are not indispensable.

The aqueous solution used in the invention may be any aqueous solution used in boiling rice, examples thereof being water, sauce-containing water, soup-containing water, stock-containing water, vinegar-containing water and the like.

In the invention, dipped rice is charged into the aqueous solution of room temperature or the aqueous solution previously heated. An amount of the aqueous solution has to be a sufficient amount for subsequent jumping heating of rice grains.

The jumping heating of rice grains is conducted to a degree of α-conversion of 60 - 80 % in the hot aqueous solution at a fixed temperature or a varying temperature as defined in claim 1 and above.

The jumping heating may be conducted by any of the foregoing three methods or the combination thereof.

The jumping heating of rice grains is an important step by which to uniformly heat all the rice grains without causing uneven heating and make uniform the subsequent water absorption.

The degree of α-conversion is determined depending on the temperature of heating with the hot aqueous solution and the time of the jumping heating. The relation thereof is shown in Table 1 below.

**Table 1: Degree of α-conversion**

| | 30 sec | 1 min | 2 min | 3 min | 5 min |
|---|---|---|---|---|---|
| 70(°C) | 38.25 | 39.72 | 48.89 | 50.56 | 64.97 |
| 80 | 51.58 | 55.37 | 58.76 | 71.75 | 76.10 |
| 90 | 60.62 | 69.66 | 70.45 | 73.84 | 79.49 |
| 100 | 74.58 | 77.97 | 85.59 | 94.92 | 96.50 |

The amount of water absorption in the invention is 50 to 280 parts by weight per 100 parts by weight of raw rice (polished rice) by which water-absorbed rice can be made. It is preferably 85 to 160 parts by weight.

The water-absorbed rice having an amount of water absorption of 100 to 130 parts by weight herein is made into boiled rice having a common hardness by heating with a microwave oven for approximately 3 minutes. The water-absorbed rice having an amount of water absorption of 130 to 160 parts by weight is made into boiled rice in the range of from a slightly soft state to a slightly gruel state by heating with a microwave oven for approximately 3 minutes. The water-absorbed rice for perfect gruel is preferably one having an amount of water absorption of 200 to 280 parts by weight per 100 parts by weight of rice.

The amount of water absorption varies with a degree of α-conversion and an amount of an aqueous solution to be charged into a container. With the higher degree of α-conversion, a larger amount of water is absorbed in the β-conversion by cooling. However, rice completely α-converted is rendered in a boiled state (that is, impastation occurs), and is hardly formed into water-absorbed rice.

In the invention, rice is preferably one having a degree of α-conversion of 60 - 80 % without surfaces of rice grains being impasted. However, rice grains with 1 millimeter of surfaces slightly impasted can be partially mixed or wholly used.

As is apparent from Table 1, the jumping heating at 100°C provides rice grains having a degree of α-conversion of 74.58 % for 30 seconds, and the jumping heating at 100°C for 1 minute provides rice grains having a degree of α-conversion of 77.97 %.

The degree of α-conversion is 80 % or less, and a degree of α-conversion of 60 to 80 % is obtained in the method for making the water-absorbed rice according to the invention.

Rice grains in which α-conversion proceeds in a water-absorbable condition and an aqueous solution for water absorption are charged into a container.

The aqueous solution is the hot aqueous solution used in the jumping heating, and it may be another aqueous solution. Further, it may be a mixed aqueous solution of these.

The amounts of the rice grains and the aqueous solution are measured before they are charged into a container. The amount of the aqueous solution to be added can exactly be determined by being calculated from the amount of dipped rice used first. Further, after the heating is completed, the amount of water absorption can be adjusted by adding the aqueous solution.

The container may be either an open container or a closed container. The open container is preferably a tough aluminum box-shaped open container or the like, and it is advisable to set a lid, if possible. As the closed container, any container is available so long as it has a resistance to heat of approximately 150°C and can be closed and cooled. A tough, airtight bag made of a nylon film or the like, or a container of a heat-resistant resin such as polypropylene or the like is preferable.

When the α-converted rice and the aqueous solution for water absorption are charged in a bag made of a nylon film laminated with polypropylene or a heat-resistant container made of polypropylene and are heat-sealed, complete sealing can be conducted.

It is advisable that cooling is rapidly conducted to complete water absorption after the α-converted rice and the aqueous solution for water absorption are charged in an open container or a closed container.

The cooling may be conducted by allowing to stand, by refrigeration or by freezing. In case of a closed container, it is preferable that the container is cooled as soon as possible by throwing the same into cold water of 3 to 30°C or blowing cold gas (cold gas such as carbon dioxide gas, nitrogen gas or the like) to expedite water absorption.

The water-absorbed rice with water absorption completed can be stored for a long period of time in a state sealed in the closed container as such or by being refrigerated or frozen.

In the method for making the water-absorbed rice in the invention, dipped rice is subjected to the jumping heating in the hot aqueous solution, whereby the heating is exerted on the whole surfaces of rice grains and the uniform water absorption can be conducted when the resulting α-converted rice and the aqueous solution for water absorption are charged into a container and cooled.

The water-absorbed rice with water absorption uniformly conducted becomes cooked rice with a good taste of fresh-boiled rice by heating for a short period of time with a microwave oven or a steamer before eating.

Examples of the invention are described below.

### Example 1

1.4 kg of polished rice was dipped in water for 2 hours to obtain 1.8 kg of dipped rice.

Separately, a 10-liter teflon-coated pot was set, and 1.8 liters of hot water was poured therein, and heated from below with a gas burner so as to boil all the time.

The dipped rice (1.8 kg) was charged in sequence into the boiling pot and the rice grains were subjected to jumping heating for 1 minute, the rice grains being circulated (i.e., going up and down repeatedly) in the boiling water.

The whole contents (rice and water weighed 3.1 kg) of the pot were put into a bag made of a nylon film, and immediately closed by heat sealing. The bag was promptly thrown into a cold water tank of 5°C for cooling.

The bag was withdrawn, put as such into a refrigerator of 3°C, and stored for 3 days therein.

After the storage, the bag was opened. The weight of the contents (water-absorbed rice) of the bag was measured, and it was 3.0 kg. No excess water was found.

The obtained water-absorbed rice absorbed 114 parts by weight (1.6 kg) of water per 100 parts by weight of the polished rice (1.4 kg).

3.0 kg of this water-absorbed rice was placed as such into a steamer with a cloth laid, and steam-heated for 7 minutes. Then, it was good-tasting cooked rice with a flavor of fresh-boiled rice.

### Example 2

0.7 kg of polished rice was dipped in water for 3 hours to obtain 0.9 kg of dipped rice.

Separately, a teflon-coated pot (10 liters) fitted with an agitator was set, and 2.15 kg of hot water was charged therein. 0.9 kg of the dipped rice was charged in sequence into the hot water being agitated. The temperature of the hot water was maintained at 80°C, and the rice grains were subjected to jumping heating for 5 minutes, the rice grains circulated (i.e., going up and down repeatedly) in the hot water by agitating with the agitator.

Only rice (1.0 kg) of the whole contents (rice and water weighed 3.0 kg) of the pot was placed into a bag made of a nylon film, and 0.8 kg of water containing a stock was charged therein. The bag was immediately closed by heat sealing. The bag was immediately put in a tub into which city water of 15°C was being poured, cooled, and stored for 3 days by refrigeration.

After the storage, the bag was opened, and the weight of the contents (water-absorbed rice) was measured. Then, it was 1.8 kg, and the surfaces were slightly wet.

The obtained water-absorbed rice absorbed 157 parts by weight (1.1 kg) of water per 100 parts by weight of the polished rice (0.7 kg).

50 g of water was added to 100 g of this water-absorbed rice, and heated with a microwave oven for 4 minutes. A richly flavored, good-tasting gruel was obtained with a smell of fresh-boiled rice.

### Example 3

1.0 kg of polished rice was dipped in water for 2 hours to obtain 1.2 kg of dipped rice.

Separately, a teflon-coated pot (10 liters) provided in the bottom with a bubble jetting port was set, and 1.6 liters of hot water was poured therein. This was heated from below with a gas burner. At the same time, air bubbles heated were jetted from the bottom in a boiling manner.

1.2 kg of the dipped rice was charged in sequence into the pot maintained at 90°C, and rice grains were subjected to jumping heating for 3 minutes, the rice grains being circulated (i.e., going up and down repeatedly) in the hot water.

The whole contents (rice and water weighed 2.3 kg) of the pot were put into a bag made of a nylon film, and immediately the day was closed by heat sealing. The bag was promptly thrown into a cold water tank of 5°C for cooling.

The bag was withdrawn, placed as such into a refrigerator of 3°C, and stored for 3 days therein.

After the storage, the bag was opened. The weight of the contents (water-absorbed rice) was measured, and it was 2.3 kg. No excess water was found.

The obtained water-absorbed rice absorbed 130 parts by weight (1.3 kg) of water per 100 parts by weight of the polished rice (1.0 kg).

2.3 kg of the obtained water-absorbed rice was divided in small portions each weighing 150 g, and heated with a 500 W microwave oven for 3 minutes and 10 seconds. Then, good-tasting cooked rice was obtained with a flavor of fresh-boiled rice.

### Example 4

1.0 kg of polished rice was dipped in water for 8 hours, and the surface of the resulting dipped rice was sterilized through pressurized steam of 105°C on a belt conveyor to obtain 1.2 kg of the sterile dipped rice.

Separately, a teflon-coated pot (10 liters) provided in the bottom with a bubble jetting port was set, and 1.6 liters of hot water was poured therein. This was heated from below with a gas burner. At the same time, air bubbles heated were jetted from the bottom in a boiling manner.

1.2 kg of the sterile dipped rice was charged in sequence into the pot maintained at 90°C, and rice grains were subjected, the rice grains being circulated (i.e., going up and down repeatedly) in the hot water to jumping heating for 3 minutes with circulation.

The whole contents (rice and water weighed 2.3 kg) of the pot were charged into an open container made of aluminum, and a lid of an aluminum plate was put thereon. It was immediately placed into a refrigerator of 3°C for cooling.

The container was stored as such in the refrigerator of 3°C for 3 days.

After the storage, the weight of the water-absorbed rice was measured, and it was 2.3 kg. No excess water was found.

Further, separately, the lid was hooked, and approximately the half of the aluminum container was sunk in water of 5°C. It was allowed to cool for approximately 20 minutes, and then stored in the refrigerator of 3°C. In this case, approximately the same result was provided.

The obtained water-absorbed rice absorbed 130 parts by weight (1.3 kg) of water per 100 parts by weight of the polished rice (1.0 kg).

2.3 kg of the obtained water-absorbed rice was divided in small portions each weighing 150 g, and heated with a 500 W microwave oven for 3 minutes and 10 seconds. Then, good-tasting cooked rice was obtained with a flavor of fresh-boiled rice.

### Effects of the Invention

Dipped rice is charged into the aqueous solution, subjected to jumping heating in which rice grains are jumped in the hot aqueous solution one by one and circulated therein, charged into a container along with the aqueous solution for water absorption and cooled, whereby uniform water absorption is conducted and when it is later heated with a microwave oven or the like, fresh-boiled rice which is uniform without a hard portion can be provided.

## Claims

1. A method for making water-absorbed rice which comprises
a) charging dipped rice into an aqueous solution, wherein the dipped rice is one obtained by dipping polished rice in water or hot water for ten minutes or more;
b) conducting jumping heating of said dipped rice grains in a hot aqueous solution,
wherein the jumping heating is one selected from the following three heating manners:
(1) bubbles are generated upward from the pot bottom to be heated, thereby the rice grains being jumped one by one in the aqueous solution at 90 - 100 °C under atmospheric pressure or at 100 - 120 °C under increased pressure
(2) hot water is agitated with an agitation, thereby the rice gains being jumped one by one in the aqueous solution at 60 - 120 °C, or
(3) air is fed from the pot bottom to be heated and blown as bubbles using a bubbling machine, thereby the rice grains being jumped one by one in the aqueous solution at 60 - 1 20°C;
c) stopping the jumping heating when the α-conversion degree of starch of the heated rice reaches 60 - 80 %;
d) placing the rice grains along with one selected from the following (1) to (3)
(1) the aqueous solution remaining after the jumping heating,
(2) an aqueous solution, or
(3) a mixture of (1) and (2)
for water-absorption into the container,
e) and cooling the container,
wherein the ratio of absorbed water to the starting polished rice in the final product, water-absorbed rice, is 85 - 280 parts by weight per 100 parts by weight of the starting polished rice.

2. The method according to claim 1,
wherein sterilization is conducted in step a) with hot air or steam and/or pressurized steam of a high temperature for a short period of time, before the dipped rice is charged into the aqueous solution.

3. The method according to claim 1,
wherein the cooling of the container in step e) is conducted by at least one selected from the group consisting of cold water, cold gas, refrigeration and freezing.

4. The method according to claim 3,
wherein the cooling is conducted by throwing the same into cold water of 3-30°C.

5. The method according to claim 1,
wherein the aqueous solution in step a) and/or d) is one selected from the group consisting of water, sauce-containing water, soup-containing water, stock-containing water and vinegar-containing water.

6. The method according to claim 1,
wherein the jumping heating in step b) is conducted at approximately 2 to 5 minutes at 80 °C or approximately 1 minute at 100 °C.

7. The method according to claim 1,
wherein the ratio of absorbed water to the starting polished rice in step e) is 100 - 130 parts by weight per 100 parts by weight of the starting polished rice.

8. The method according to claim 1, wherein the ratio of absorbed water to the starting polished rice in step e) is 130 - 160 parts by weight per 100 parts by weight of the starting polished rice.

9. The method according to claim 1 ,
wherein the ratio of absorbed water to the starting polished rice in step e) is 200 - 280 parts by weight per 100 parts by weight of the starting polished rice.

## Patentansprüche

1. Verfahren zur Herstellung von Wasser-absorbiertem Reis, welches umfasst
a) Zugabe von getauchtem Reis in eine wässrige Lösung, wobei der getauchte Reis einer ist, der durch Eintauchen von poliertem Reis in Wasser oder heißes Wasser während 10 Minuten oder mehr erhalten wird;
b) Durchführung eines Spring-Erhitzens der getauchten Reiskörner in einer wässrigen heißen Lösung,
wobei das Spring-Erhitzen eines ist, das ausgewählt wird aus den folgenden drei Erhitzungsarten:
(1) Blasen werden oberhalb des zu erwärmenden Topfbodens erzeugt, wodurch die Reiskörner einzeln in der wässrigen Lösung bei 90 bis 1 00°C unter Atmosphärendruck oder bei 100-1 20°C unter erhöhtem Druck auf und ab bewegt werden
(2) heißes Wasser wird durch einen Rührer gerührt, wodurch die Reiskörner einzeln in der wässrigen Lösung bei 60-1 20°C auf und ab bewegt werden, oder
(3) Luft wird vom Boden des zu erwärmenden Topfes zugeführt und als Blasen unter Verwendung einer Blubbermaschine durchgeblasen, wodurch die Reiskörner einzeln in der wässrigen Lösung bei 60-1 20°C auf und ab bewegt werden;
c) Abbruch des Spring-Erhitzens, wenn der α-Umwandlungsgrad der Stärke des erwärmten Reises 60-80 % erreicht;
d) Überführung der Reiskörner gemeinsam mit einem aus den folgenden (1) bis (3) ausgewählten Bestandteil
(1) der nach dem Spring-Erhitzen verbleibenden wässrigen Lösung
(2) einer wässrigen Lösung oder
(3) einem Gemisch von (1) und (2)
zur Wasserabsorption in den Behälter,
e) und Kühlen des Behälters,
wobei das Verhältnis von absorbiertem Wasser zum polierten Reis als Ausgangsmaterial im Endprodukt, Wasser-absorbierter Reis, 85-280 Gewichtsteile pro 100 Gewichtsteile des polierten Reises als Ausgangsmaterial beträgt.

2. Verfahren nach Anspruch 1 , wobei in Schritt a) eine Sterilisation mit heißer Luft oder Wasserdampf und/oder Wasserdampf unter Druck mit einer hohen Temperatur während einer kurzen Zeit durchgeführt wird, bevor der getauchte Reis in die wässrige Lösung gegeben wird.

3. Verfahren nach Anspruch 1 , wobei das Kühlen des Behälters in Schritt e) durchgeführt wird durch mindestens ein Mittel, das ausgewählt wird aus der aus kaltem Wasser, kaltem Gas, Kühlen im Kühlschrank und Einfrieren bestehenden Gruppe.

4. Verfahren nach Anspruch 3, wobei das Kühlen durch Werfen desselben in kaltes Wasser von 3-30°C durchgeführt wird.

5. Verfahren nach Anspruch 1 , wobei die wässrige Lösung in Schritt a) und/oder d) eine ist, die ausgewählt wird aus der aus Wasser, soßehaltigem Wasser, suppehaltigem Wasser, brühehaltigem Wasser und essighaltigem Wasser bestehenden Gruppe.

6. Verfahren nach Anspruch 1 , wobei das Spring-Erhitzen in Schritt b) während ungefähr 2 bis 5 Minuten bei 80°C oder während ungefähr 1 Minute über 100°C durchgeführt wird.

7. Verfahren nach Anspruch 1 , wobei das Verhältnis von absorbiertem Wasser zum polierten Reis als Ausgangsmaterial in Schritt e) 100-1 30 Gewichtsteile pro 100 Gewichtsteile des polierten Reises als Ausgangsmaterial beträgt.

8. Verfahren nach Anspruch 1 , wobei das Verhältnis von absorbiertem Wasser zum polierten Reis als Ausgangsmaterial in Schritt e) 130-160 Gewichtsteile pro 100 Gewichtsteile des polierten Reises als Ausgangsmaterial beträgt.

9. Verfahren nach Anspruch 1 , wobei das Verhältnis von absorbiertem Wasser zum polierten Reis als Ausgangsmaterial in Schritt e) 200-280 Gewichtsteile pro 100 Gewichtsteile des polierten Reises als Ausgangsmaterial beträgt.

## Revendications

1. Méthode de préparation de riz absorbeur d'eau comprenant les étapes consistant à :
a) charger le riz trempé dans une solution aqueuse, où le riz trempé est obtenu en trempant du riz poli dans de l'eau ou dans de l'eau chaude pendant dix minutes ou plus ;
b) faire chauffer en les agitant lesdits grains de riz trempés dans une solution aqueuse chaude,
dans laquelle le chauffage avec agitation est sélectionné parmi les trois procédés de chauffage suivants :
(1) des bulles sont produites et remontent du fond de la casserole à chauffer, les grains de riz étant ainsi agités un par un dans la solution aqueuse à 90°C-100°C à pression atmosphérique ou à 100°C-120°C sous pression augmentée
(2) l'eau chaude est agitée avec un instrument pour agiter, les grains de riz étant agités un par un dans la solution aqueuse à 60°C-120°C, ou
(3) de l'air est transmis dans le fond de la casserole à chauffer et soufflé sous forme de bulles au moyen d'un appareil à bulles, les grains de riz étant ainsi agités un par un dans la solution aqueuse à 60°C-120°C ;
c) arrêter le chauffage avec agitation lorsque le degré de conversion α de l'amidon du riz chauffé atteint 60-80 % ;
d) disposer les grains de riz avec l'un des éléments suivants (1) à (3)
(1) le reste de la solution aqueuse après le chauffage avec agitation,
(2) une solution aqueuse, ou
(3) un mélange de (1) et (2)
dans le récipient pour absorber l'eau,
e) et refroidir le récipient,
dans laquelle le ratio d'eau absorbé au riz poli de départ dans le produit final de riz absorbeur d'eau est de 85 à 280 parties en poids pour 100 parties en poids du riz poli de départ.

2. Méthode selon la revendication 1, dans laquelle une stérilisation est effectuée au cours de l'étape a) avec de l'air chaud ou de la vapeur et/ou de la vapeur sous pression ou à haute température pendant une courte durée, avant de charger le riz trempé dans la solution aqueuse.

3. Méthode selon la revendication 1, dans laquelle le refroidissement du récipient au cours de l'étape e) est réalisé par au moins un moyen sélectionné parmi le groupe constitué par l'eau froide, le gaz froid, la réfrigération et la congélation.

4. Méthode selon la revendication 3, dans laquelle le refroidissement est réalisé en jetant la préparation dans de l'eau froide à 3-30°C.

5. Méthode selon la revendication 1, dans laquelle la solution aqueuse de l'étape a) et/ou d) est sélectionnée parmi le groupe constitué par l'eau, une eau contenant de la sauce, une eau contenant de la soupe, une eau contenant de la viande, et une eau contenant du vinaigre.

6. Méthode selon la revendication 1, dans laquelle le chauffage avec agitation au cours de l'étape b) est réalisé pendant environ 2 à 5 minutes à 80°C ou environ 1 minute à 100°C.

7. Méthode selon la revendication 1, dans laquelle le ratio d'eau absorbé au riz poli de départ au cours de l'étape e) est de 100 à 130 parties en poids pour 100 parties en poids du riz poli de départ.

8. Méthode selon la revendication 1, dans laquelle le ratio d'eau absorbé au riz poli de départ au cours de l'étape e) est de 130 à 160 parties en poids pour 100 parties en poids du riz poli de départ.

9. Méthode selon la revendication 1, dans laquelle le ratio d'eau absorbé au riz poli de départ au cours de l'étape e) est de 200 à 280 parties en poids pour 100 parties en poids du riz poli de départ.
